## Europäisches Patentamt

## European Patent Office

## Office européen des brevets

(11) Veröffentlichungsnummer: **0 014 861**
**B1**

(12) # EUROPÄISCHE PATENTSCHRIFT

(45) Veröffentlichungstag der Patentschrift:
**28.07.82**

(51) Int. Cl.³: **G 01 B 11/06,** G 01 B 11/02,
G 01 S 17/46

(21) Anmeldenummer: **80100401.1**

(22) Anmeldetag: **25.01.80**

(54) **Verfahren und Vorrichtung zur berührungslosen Abstands- oder Dickenmessung mit einer Regelung der Richtung des Lichtstrahlbündels.**

(30) Priorität: **20.02.79 DE 2906494**

(43) Veröffentlichungstag der Anmeldung:
**03.09.80 Patentblatt 80/18**

(45) Bekanntmachung des Hinweises auf die Patenterteilung:
**28.07.82 Patentblatt 82/30**

(84) Benannte Vertragsstaaten:
**BE FR GB IT LU NL SE**

(56) Entgegenhaltungen:
**BE-A-870 893**
**DE-A-2 508 836**

(73) Patentinhaber: **SIEMENS AKTIENGESELLSCHAFT**
**Berlin und München, Postfach 22 02 61,**
**D-8000 München 22 (DE)**

(72) Erfinder: **Bodlaj, Viktor, Dr., Werinherstrasse 69,**
**D-8000 München 90 (DE)**

Verfahren und Vorrichtung zur berührungslosen Abstands- oder Dickenmessung mit einer Regelung der Richtung des Lichtstrahlbündels.

Die Erfindung bezieht sich auf ein Verfahren zur berührungslosen Abstands- oder Dickenmessung, bei dem ein von einer Lichtquelle erzeugtes scharf gebündeltes Lichtstrahlbündel durch einen Strahlablenker periodisch über einen Messraum ausgelenkt wird, bei dem die Zeitdifferenz zwischen einem Bezugs- und mindestens einem Messsignal ein Mass für den Abstand oder die Dicke darstellt und bei dem die Zeitdifferenz zwischen einem Referenz- und dem Bezugssignal sowie zwischen dem Bezugs- und einem ersten Ablenksignal durch Vergleich mit zwei vorgebbaren festen Zeitdifferenzen zur Regelung der Ablenkfrequenz und der Ablenkamplitude des Lichtstrahlbündels verwendet werden.

Dieses Verfahren und eine entsprechende Vorrichtung zur Durchführung desselben sind aus den Siemens Forschungs- und Entwicklungsberichten Bd. 4 (1975), Nr. 6, S. 336-344 und Bd. 6 (1977), Nr. 3, S. 180-188 bekannt. Dabei hält die Zeitdifferenz zwischen dem Referenz- und dem Bezugssignal den Strahlablenker in der Resonanzfrequenz. Die Zeitdifferenz zwischen Bezugs- und erstem Ablenksignal hält die Ablenkgeschwindigkeit konstant. Solange sich die Richtung des Lichtstrahlbündels nicht ändert, bleibt auch die Messzeit bei unverändertem Abstand stabil.

Es hat sich jedoch gezeigt, dass sich wegen thermischer Einflüsse auf den Strahlablenker und auf die Lichtquelle die Richtung des Lichtstrahlbündels ändern kann. Da das Referenzsignal unabhängig von der Richtung des Lichtstrahlbündels erzeugt wird, ändert sich bei einer Richtungsänderung die Zeitdifferenz zwischen Referenz- und Bezugssignal, da — je nach der Verschiebung der Richtung des Lichtstrahlbündels um einen positiven oder negativen Winkel — das ausgelenkte Lichtstrahlbündel den für das Bezugssignal verantwortlichen lichtempfindlichen Detektor über die Reflexion von einer Bezugsebene in einer kürzeren oder längeren Zeit erreicht. Über eine Änderung der Ablenkfrequenz wird diese Abweichung der gemessenen Zeitdifferenz ausgeglichen. Eine veränderte Ablenkfrequenz verändert andererseits die Ablenkzeit, also die Zeitdifferenz zwischen dem Bezugs- und einem ersten Ablenksignal. Über eine Veränderung der Ablenkamplitude wird die Zeitdifferenz zwischen Bezugs- und erstem Ablenksignal wieder stabilisiert.

Die geänderte Ablenkamplitude ändert jedoch die Messzeit und verursacht somit einen Messfehler, vor allem im oberen Messbereich.

Die Richtung des Lichtstrahlbündels mit optomechanischen Massnahmen im Strahlablenker und in der Lichtquelle konstant zu halten, würde einen unvertretbar hohen Aufwand erfordern.

Der vorliegenden Erfindung liegt daher die Aufgabe zugrunde, ein Verfahren der eingangs genannten Art derart zu erweitern, dass eine mögliche Richtungsänderung des Lichtstrahlbündels optoelektronisch korrigiert wird.

Diese Aufgabe wird erfindungsgemäss dadurch gelöst, dass eine weitere Zeitdifferenz zwischen dem Bezugs- oder erstem Ablenksignal und einem weiteren Ablenksignal ermittelt und durch Vergleich mit einer dritten vorgebbaren festen Zeitdifferenz zur Regelung der Richtung des Lichtstrahlbündels verwendet wird. Bei diesem Verfahren wird praktisch ausgenutzt, dass es bei einer sinusförmigen Auslenkung des Lichtstrahlbündels mit zwei unterschiedlichen Frequenzen durch Anpassung der Amplituden zwar möglich ist, die Zeit für das Durchlaufen einer bestimmten Strecke bei beiden Frequenzen gleich gross zu machen, jedoch nicht die Zeiten für das Durchlaufen zweier unterschiedlich langer Strecken. Wenn man andererseits erreichen kann, dass die Zeiten für das Durchlaufen zweier unterschiedlich langer Strecken gleich zweier vorgebbarer Zeitdifferenzen sind, dann entspricht die Frequenz und die Amplitude des Lichtstrahlbündels zwangsläufig denen des geforderten Sinus.

Tritt also infolge einer Richtungsänderung des Lichtstrahlbündels eine Frequenz- und Amplitudenänderung auf, so wird über die weitere gemessene Zeitdifferenz die Richtung des Lichtstrahlbündels korrigiert. Durch die anderen gemessenen Zeitdifferenzen stellen sich damit automatisch auch wieder die richtige Frequenz, d.h. die Resonanzfrequenz, und die vorgewählte Amplitude ein.

Ein weiterer Vorteil dieser stabilisierten Richtung des Lichtstrahlbündels ist der problemlose Austausch beispielsweise der Lichtquelle; die Vorrichtung braucht nicht mehr nachjustiert zu werden.

Bei den aus den eingangs genannten Druckschriften bekannten Vorrichtungen zur berührungslosen Abstands- oder Dickenmessung ist dem Strahlteiler ein Strahlablenker nachgeordnet. Im Bereich des durch den Strahlteiler ausgeblendeten Lichtstrahlbündels sind zwei lichtempfindliche Detektoren zur Ermittlung des Bezugs- und des ersten Ablenksignals angeordnet. Ausserdem ist mindestens ein weiterer lichtempfindlicher Detektor vorgesehen, dessen optische Achse das Lichtstrahlbündel in einer durch das Bezugssignal festgelegten Null-Ebene schneidet. Eine Auswertelektronik erzeugt aus den Detektorsignalen Regelsignale für die Ablenkfrequenz und die Ablenkamplitude und einen dem Abstand oder der Dicke entsprechenden Wert. Dabei werden aus den Detektorsignalen zunächst Zeitdifferenzen erzeugt. Diese werden in digitaler und in analoger Form dargestellt. So kann ein zu messender Abstand beispielsweise aus den digitalen Werten mit Hilfe eines Computers ermittelt werden.

Zur Durchführung des erfindungsgemässen Verfahrens ist bei einer derartigen Vorrichtung vorgesehen, dass im Bereich des ausgeblendeten Lichtstrahlbündels ein dritter lichtempfindlicher Detektor angeordnet ist, dass das Signal dieses Detektors zusammen mit dem Signal des ersten oder zweiten Detektors einem Zeitdiskriminator zugeführt ist, dessen Ausgangsimpuls über einen Impuls-Digital-Wandler und einen Digital-Analog-Wandler in eine der Zeitdifferenz zwischen den beiden Signalen proportionale Gleichspannung umwandelbar ist, dass diese Gleichspannung einem Eingang eines Differenzverstärkers zugeführt ist, dessen anderer Eingang mit einer fest vorgebbaren Referenzspannung beaufschlagt ist, und dass das Ausgangssignal des Differenzverstärkers als Regelsignal für die Richtung des Lichtstrahlbündels dient.

Durch einen geringen zusätzlichen Aufwand an Auswertelektronik und einen einzigen zusätzlichen lichtempfindlichen Detektor ist es somit möglich, die Messkonstanz unabhängig von thermischen Veränderungen an der Vorrichtung über einen beliebig langen Zeitraum sicherzustellen.

Wird als Strahlablenker ein piezokeramischer Strahlablenker verwendet, so ergibt sich eine besonders einfache Regelung bzw. Korrektur der Richtung des Strahlbündels dadurch, dass der Ausgang des Differenzverstärkers direkt mit dem piezokeramischen Strahlablenker verbunden ist. Der von dem Generator an den Strahlablenker angelegten Wechselspannung zur Erzeugung der gewünschten Ablenkfrequenz wird auf diese Art eine Gleichspannung überlagert. Der Strahlablenker schwingt dann nicht mehr um seine Ruhelage. Diese direkte Korrektur der Richtung des Lichtstrahlbündels eignet sich insbesondere für kleine Abweichungen.

Für grössere Abweichungen besteht eine besonders günstige Ausführungsform darin, dass die Ausgangsspannung des Differenzverstärkers einem Motorpotentiometer zugeführt ist, dessen veränderbarer Mittenabgriff mit dem piezokeramischen Strahlablenker verbunden ist.

Anhand dreier Figuren wird im folgenden das erfindungsgemässe Verfahren und ein bevorzugtes Ausführungsbeispiel einer Vorrichtung näher beschrieben und erläutert.

Fig. 1 zeigt den Einfluss der Richtungsänderung auf die Zeitdifferenzen zur Stabilisierung der Frequenz und der Amplitude.

Fig. 1a zeigt dabei den Einfluss einer Richtungsänderung um einen positiven und

Fig. 1b den Einfluss einer Richtungsänderung um einen negativen Winkel.

Fig. 2 zeigt die periodische Ablenkung des Lichtstrahlbündels für die korrekte Richtung, für eine Richtungsabweichung und die über die Frequenz- und Amplitudenkorrektur korrigierte Ablenkung.

Fig. 3 zeigt — beschränkt auf die wesentlichen Teile — eine Vorrichtung zur berührungslosen Abstands- oder Dickenmessung mit der erfindungsgemässen Regelung der Richtung des Lichtstrahlbündels.

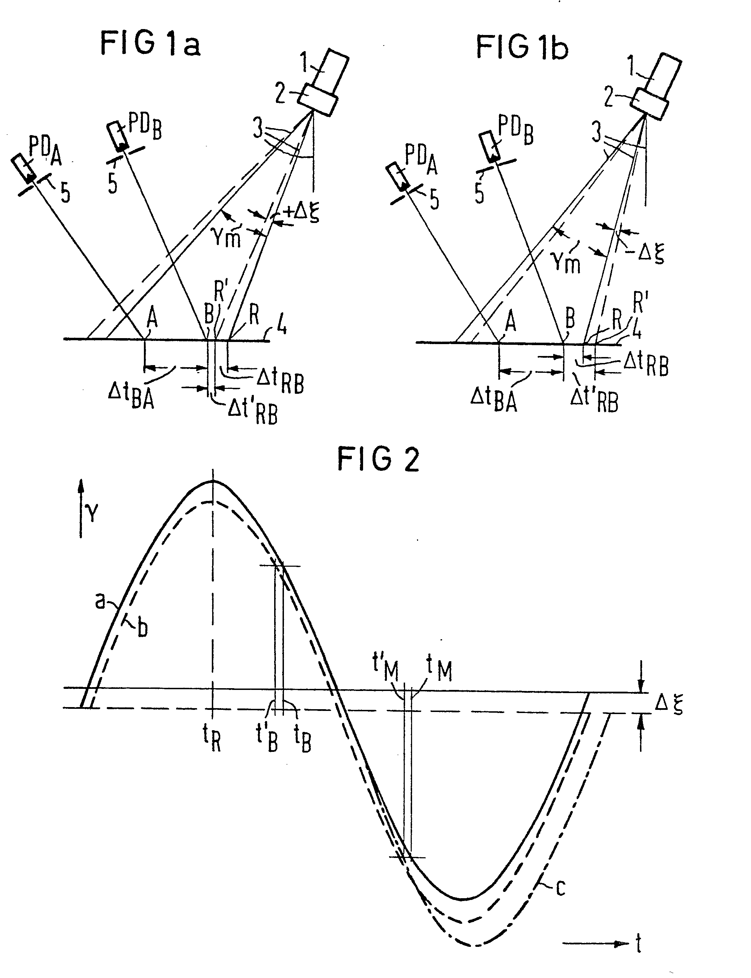

In den Fig. 1a und 1b ist mit 1 die Lichtquelle, beispielsweise ein Laser, bezeichnet. 2 ist ein piezokeramischer Strahlablenker, den das Lichtstrahlbündel 3 verlässt. Dieses Lichtstrahlbündel 3 fällt auf eine durch einen Strahlteiler festgelegte Bezugsebene 4. Weiterhin sind als erster und zweiter lichtempfindlicher Detektor eine Fotodiode $PD_B$ und eine Fotodiode $PD_A$ jeweils mit einer Aperturblende 5 dargestellt.

Diese Vorrichtung entspricht dem Stand der Technik, wie er beispielsweise aus dem Siemens Forschungs- und Entwicklungsbericht Bd. 4 (1975), Nr. 6, S. 340, Fig. 8 bekannt ist. Für den Fall, dass das Lichtstrahlbündel die korrekte Richtung besitzt, gelten die durchgezogenen Linien des Lichtstrahlbündels 3. Die gestrichelten Linien gelten für eine Abweichung des Lichtstrahlbündels von der vorgegebenen Richtung. Das Lichtstrahlbündel 3 wird periodisch sinusförmig ausgelenkt. Unabhängig von der Richtung des Lichtstrahlbündels wird bei einer bestimmten Phase ein Referenzsignal erzeugt, beispielsweise zu einem Zeitpunkt, wenn das Lichtstrahlbündel bei korrekter Richtung auf den Punkt R auf der Bezugsebene auftrifft. Die Zeitdifferenz $\Delta t_{RB}$, die das Lichtstrahlbündel benötigt, um vom Punkt R auf der Bezugsebene 4 zum Punkt B zu gelangen, in dem von der Fotodiode $PD_B$ ein Bezugssignal abgegeben wird, dient als Mass für die Ablenkfrequenz des Lichtstrahlbündels. Durch Regelung dieser Zeitdifferenz auf eine vorgegebene feste Zeitdifferenz wird der Strahlablenker 2 in der Resonanzfrequenz gehalten.

Erreicht das Lichtstrahlbündel den Punkt A auf der Bezugsebene 4, so gibt die Fotodiode $PD_A$ ein erstes Ablenksignal ab. Die Zeitdifferenz $\Delta t_{BA}$ zwischen dem Bezugs- und dem ersten Ablenksignal dient zur Regelung der Ablenkgeschwindigkeit. Solange sich die Richtung des Lichtstrahlbündels nicht geändert hat, bleibt auch die Messzeit bei unverändertem Abstand stabil.

Wenn aber das Lichtstrahlbündel wegen thermischer Einflüsse auf den Strahlablenker 2 und den Laser 1 seine Richtung um $+\Delta\zeta$ verändert, wie es in der Fig. 1a dargestellt ist, so dreht sich auch der Ablenkbereich $\gamma_m$ um diesen Winkel $\Delta\zeta$. Wegen dieser Richtungsverschiebung erreicht das ausgelenkte Lichtstrahlbündel die Fotodiode $PD_B$ über die Reflexion an der Bezugsebene 4 in kürzerer Zeit nach dem Referenzsignal. Der Ort R', auf den das Lichtstrahlbündel zum Zeitpunkt des Referenzsignals auf der Bezugsebene 4 auftrifft, ist entsprechend dem Winkel $\Delta\zeta$ dichter an den Ort B herangerückt. Die Zeitdifferenz $\Delta t'_{RB}$ ist somit kleiner als die Zeitdifferenz $\Delta t_{RB}$. Über eine Reduzierung der Ablenkfrequenz wird diese verkleinerte Zeitdifferenz wieder auf die ursprüngliche Zeitdifferenz $\Delta t_{RB}$ eingestellt. Die niedrigere Ablenkfrequenz verlängert jedoch die Ablenkzeit zwischen den Punkten B und A. Diese verlängerte Ablenkzeit wird über eine Vergrösserung der Ablenkamplitude und damit der Ablenkgeschwindigkeit wieder auf die vorgegebene Ablenkzeit $\Delta t_{BA}$ zurückgeführt.

Eine Änderung der Richtung des Lichtstrahlbündels um einen Winkel $-\Delta\zeta$ ist entsprechend in der Fig. 1b dargestellt. Diese Änderung hat zur Folge, dass sich eine kleinere Ablenkamplitude über die Stabilisierung der Zeitdifferenz $\Delta t_{BA}$ einstellt.

In der Fig. 2 sind die Auswirkungen dieser Nachregelung der Ablenkfrequenz und der Ablenkamplitude bei einer Richtungsänderung des Lichtstrahlbündels auf die Messzeit dargestellt. Dabei ist für die periodische Ablenkung des Lichtstrahlbündels der Ablenkwinkel $\gamma$ über der Zeit t dargestellt. Die durchgezogene Sinuskurve a zeigt die normale Ablenkung des Lichtstrahlbündels ohne Richtungsabweichung; die gestrichelte Kurve b zeigt die periodische Ablenkung bei einer Richtungsabweichung des Lichtstrahlbündels um den Winkel $+\Delta\zeta$. Die strichpunktierte Kurve c schliesslich zeigt die über die Stabilisierung der Zeitdifferenzen $\Delta t_{RB}$ und $\Delta t_{BA}$ eingestellte Kurve mit vergrösserter Ablenkamplitude und verringerter Frequenz. Ausserdem sind die Zeiten für das Referenzsignal, das Bezugssignal und das eigentliche Messsignal eingezeichnet. Wie dieser Figur zu entnehmen ist, verkürzt die vergrösserte Ablenkamplitude die Messzeit $(t_M'-t_B < t_M-t_B)$ und verursacht somit einen Messfehler, vor allem im oberen Messbereich.

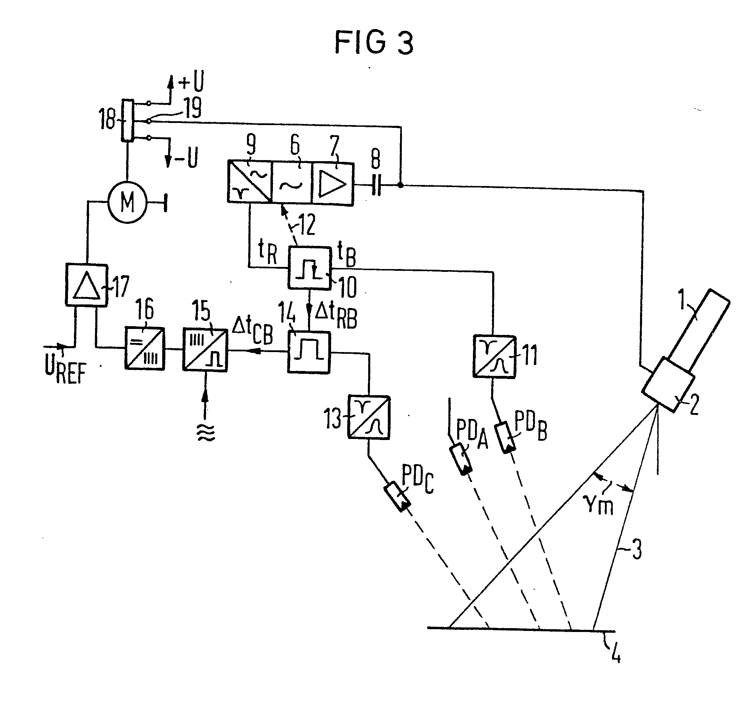

In der Fig. 3 ist wiederum die bekannte Vorrichtung dargestellt wie bereits in den Fig. 1a und 1b. Gleiche Teile sind mit gleichen Bezugszeichen versehen. Vereinfacht ist weiter ein Generator 6 dargestellt, der über einen Verstärker 7 und einen Kondensator 8 den Strahlablenker 2 ansteuert. Auf der anderen Seite wird von dem Generatorsignal in einem Impulserzeuger 9 zum Zeitpunkt $t_R$ als Referenzsignal ein Nadelimpuls erzeugt. Dieser Impuls wird einem Zeitdiskriminator 10 zugeführt, dem andererseits zum Zeitpunkt $t_B$ ein aus dem Bezugssignal der Fotodiode $PD_B$ über einen Impulsformer 11 erzeugter Nadelimpuls zugeführt wird. Im Zeitdiskriminator 10 entsteht dadurch ein Impuls mit der Impulsdauer $\Delta t_{RB}$, der — wie durch die Wirklinie 12 angedeutet ist — zur Steuerung der Generatorfrequenz benutzt wird.

Der Übersichtlichkeit halber ist auf die Darstellung der Auswertung des von der Fotodiode $PD_A$ erzeugten ersten Ablenksignals verzichtet worden.

Zur Korrektur der Richtungsänderung des Lichtstrahlbündels 3 ist eine zusätzliche Fotodiode $PD_C$ vorgesehen, deren Signal über einen Impulsformer 13 einem weiteren Zeitdiskriminator 14 zugeführt wird. Gleichzeitig wird diesem Zeitdiskriminator 14 das geformte Bezugssignal zugeführt. Im Zeitdiskriminator 14 entsteht dadurch ein Impuls mit der Impulsdauer $\Delta t_{BC}$. Dieser wird zunächst in einem Impuls-Digital-Wandler 15 digitalisiert und in einem anschliessenden Digital-Analog-Wandler 16 in eine der Digitalzahl proportionale Gleichspannung umgewandelt. Diese Gleichspannung wird in einem Differenzverstärker 17 mit einer Referenzspannung $U_{Ref}$ verglichen. Der Ausgang des Differenzverstärkers 17 wird zur Steuerung eines Motorpotentiometers 18 verwendet, das eine symmetrische Spannungsversorgung mit den Spannungen $\pm U$ besitzt. Der veränderbare Mittenabgriff 19 des Potentiometers ist auf den Strahlablenker 2 geschaltet, so dass im Falle einer Abweichung die im Motorpotentiometer erzeugte Korrekturspannung der Wechselspannung des Generators 6 überlagert wird. Für kleinere Abweichungen wäre es ebenso denkbar, die Ausgangsspannung des Differenzverstärkers 17 direkt zur Richtungskorrektur des Strahlablenkers 2 zu verwenden. Ebenso wäre eine Richtungskorrektur der Lichtquelle 1 möglich.

Die dem Differenzverstärker 17 zugeführte Referenzspannung $U_{Ref}$ wird so gewählt, dass für eine bestimmte Richtung des Lichtstrahlbündels 3 die Ausgangsspannung des Differenzverstärkers Null ist. Wenn sich beispielsweise die Richtung des Lichtstrahlbündels um $+\Delta\zeta$ ändert, stellt sich über die Stabilisierung der Zeitdifferenzen $\Delta t_{RB}$ und $\Delta t_{BA}$ eine grössere Ablenkamplitude ein. Infolgedessen wird die Zeitdifferenz $\Delta t_{BC}$ kürzer und die Gleichspannung nach der Digital-Analog-Wandlung kleiner. Am Ausgang des Differenzverstärkers 17 entsteht eine der verkürzten Zeitdifferenz entsprechende negative Gleichspannung. Bei einer Richtungsänderung des Lichtstrahlbündels um einen negativen Winkel entsteht entsprechend eine positive Gleichspannung.

Mit der beschriebenen zusätzlichen Stabilisierung der Richtung des Lichtstrahlbündels kann eine hohe Stabilität und Reproduzierbarkeit der Messwerte und auch eine hohe Auflösung erreicht werden.

In dem Ausführungsbeispiel gemäss der Fig. 3 ist zur Regelung der Richtung des Lichtstrahlbündels 3 die Zeitdifferenz zwischen den Signalen der Detektoren $PD_B$ und $PD_C$ verwendet worden. Die Regelung ist ebenso möglich, wenn anstelle des Bezugssignals das erste Ablenksignal des Detektors $PD_A$ verwendet wird.

**Patentansprüche**

1. Verfahren zur berührungslosen Abstands- oder Dickenmessung, bei dem ein von einer Lichtquelle erzeugtes scharf gebündeltes Lichtstrahlbündel durch einen Strahlablenker periodisch über einen Messraum ausgelenkt wird, bei dem die Zeitdifferenz zwischen einem Bezugs- und mindestens einem Messignal ein Mass für den Abstand oder die Dicke darstellt und bei dem die Zeitdifferenz zwischen einem Referenz- und dem Bezugssignal sowie zwischen dem Bezugs- und einem ersten Ablenksignal durch Vergleich mit zwei vorgebbaren festen Zeitdifferenzen zur Regelung der Ablenkfrequenz und der Ablenkamplitude des Lichtstrahlbündels verwendet werden, dadurch gekennzeichnet, dass eine weitere Zeitdifferenz $(\Delta t_{BC})$ zwischen dem Bezugs- oder erstem Ablenksignal und einem weiteren Ablenksignal ermittelt und durch Vergleich mit einer dritten vorgebbaren festen Zeitdifferenz zur Regelung der Richtung des Lichtstrahlbündels (3) verwendet wird.

2. Vorrichtung zur Durchführung des Verfahrens nach Anspruch 1 mit einem dem Strahlablenker nachgeordneten Strahlteiler, einem ersten und zweiten lichtempfindlichen Detektor im Bereich des durch den Strahlteiler ausgeblendeten Lichtstrahlbündels zur Ermittlung des Bezugs- und des ersten Ablenksignals, mindestens einem weiteren lichtempfindlichen Detektor, dessen optische Achse das Lichtstrahlbündel in einer durch das Bezugssignal festgelegten Null-Ebene schneidet, sowie einer Auswertelektronik, die aus den Detektorsignalen Regelsignale für die Ablenkfrequenz und die Ablenkamplitude erzeugt und einen dem Abstand oder der Dicke entsprechenden Wert ermittelt, dadurch gekennzeichnet, dass im Bereich des ausgeblendeten Lichtstrahlbündels (3) ein dritter lichtempfindlicher Detektor (PD$_C$) angeordnet ist, dass das Signal dieses Detektors (PD$_C$) zusammen mit dem Signal des ersten oder zweiten Detektors (PD$_B$, PD$_A$) einem Zeitdiskriminator (14) zugeführt ist, dessen Ausgangsimpuls über einen Impuls-Digital-Wandler (15) und einen Digital-Analog-Wandler (16) in eine der Zeitdifferenz zwischen den beiden Signalen proportionale Gleichspannung umwandelbar ist, dass diese Gleichspannung einem Eingang eines Differenzverstärkers (17) zugeführt ist, dessen anderer Eingang mit einer fest vorgebbaren Referenzspannung (U$_{Ref}$) beaufschlagt ist, und dass das Ausgangssignal des Differenzverstärkers (17) als Regelsignal für die Richtung des Lichtstrahlbündels (3) dient.

3. Vorrichtung nach Anspruch 2 mit einem piezokeramischen Strahlablenker, dadurch gekennzeichnet, dass der Ausgang des Differenzverstärkers (17) direkt mit dem piezokeramischen Strahlablenker (2) verbunden ist.

4. Vorrichtung nach Anspruch 2 mit einem piezokeramischen Strahlablenker, dadurch gekennzeichnet, dass die Ausgangsspannung des Differenzverstärkers (17) einem Motorpotentiometer (18) zugeführt ist, dessen veränderbarer Mittenabgriff (19) mit dem piezokeramischen Strahlablenker (2) verbunden ist.

## Revendications

1. Procédé pour la mesure, sans contact, de distances ou d'épaisseurs, dans lequel un faisceau de rayons lumineux, issu d'une source lumineuse, et fortement focalisés, est dévié périodiquement par un déviateur de rayons sur un intervalle de temps de mesure, dans lequel la différence de temps entre un signal de repère et au moins un signal de mesure représente une mesure pour la distance ou l'épaisseur, et dans lequel la différence de temps entre le signal de référence et le signal de consigne ou de repère, ainsi qu'entre le signal de repère et un premier signal de déviation, sont utilisées par comparaison avec deux différences de temps fixes et prédéterminées pour le réglage de la fréquence de déviation et de l'amplitude de déviation du faisceau de rayons lumineux, caractérisé par le fait que l'on détermine une seconde différence de temps ($\Delta t_{BC}$) entre le signal de repère ou le premier signal de déviation et un second signal de déviation, et que, par comparaison avec une troisième différence de temps fixe et prédéterminée, elle est utilisée pour régler la direction du faisceau de rayons lumineux (3).

2. Dispositif pour la mise en œuvre du procédé selon la revendication 1, du type comportant un diviseur de rayons disposé en aval du déviateur de rayons, un premier et un second détecteurs photosensibles dans la zone du faisceau de rayons lumineux isolés par le diviseur de rayons, en vue de déterminer le signal de repère et le premier signal de déviation, au moins un détecteur photosensible supplémentaire dont l'axe optique coupe le faisceau de rayons lumineux dans un plan zéro déterminé par le signal de repère, ainsi qu'un dispositif électronique d'évaluation qui produit, à partir des signaux des détecteurs, des signaux de réglage pour la fréquence de déviation et l'amplitude de déviation, et détermine une valeur qui correspond à la distance ou à l'épaisseur, caractérisé par le fait que, dans la zone du faisceau de rayons lumineux (3) isolée, est disposé un troisième détecteur photosensible (PD$_C$), que le signal de ce détecteur (PD$_C$) est appliqué, avec le signal du premier et du second détecteurs (PD$_B$, PD$_A$), à un discriminateur de temps (14) dont l'impulsion de sortie est susceptible d'être transformée, par l'intermédiaire d'un convertisseur impulsion-numérique (15) et d'un convertisseur numérique-analogique (16), en une tension continue qui est proportionnelle à la différence de temps entre les deux signaux, que cette tension continue est appliquée à une entrée d'un amplificateur différentiel (17) dont l'autre entrée reçoit une tension de référence (U$_{Ref}$) fixe et déterminée à l'avance, et que le signal de sortie de l'amplificateur différentiel (17) sert de signal de régulation pour la direction du faisceau de rayons lumineux (3).

3. Dispositif selon la revendication 2, du type comportant un déviateur de rayons en un matériau piézocéramique, caractérisé par le fait que la sortie de l'amplificateur différentiel (17) est reliée directement au déviateur de rayons (2) en matériau piézocéramique.

4. Dispositif selon la revendication 2, avec un déviateur de rayons fait en un matériau piézocéramique, caractérisé par le fait que la tension de sortie de l'amplificateur différentiel (17) est appliquée à un potentiomètre à moteur (18), potentiomètre dont la prise médiane réglable (19) est reliée au dàviateur de rayons (2) en un matériau piézocéramique.

## Claims

1. A method of contactless distance or thickness measurement, in which a sharply focused light beam generated by a light source is periodically deflected by a beam deflector over an area to be measured, the time difference between a comparison signal and at least one measurement signal providing a measure of the distance or the thickness, and the time differences between a reference signal and the comparison signal and between the comparison signal and a first deflector signal being compared with two predeterminable fixed time differences and used to regulate the deflecting frequency and the deflecting amplitude of the light beam, characterised in that a further time different ($\Delta t_{BC}$) between the comparison from the first or second detector (PD$_B$, PD$_A$) to a signal or first deflecting signal and a further deflecting signal is determined and compared with a third predeterminable fixed time difference to regulate the direction of the light beam (3).

2. A device for the implementation of the method claimed in claim 1, comprising a beam reflector arranged following the beam deflector, a first and a second light-sensitive detector in the path of the light beam component reflected by the beam reflector to determine the comparison signal and the first deflector signal, at least one further light-sensitive detector whose optical axis cuts the light beam in a zero plane determined by the reference signal, and an electronic analysis unit which produces regulating signals for the deflecting frequency and the deflecting amplitude from the detector signals and determines a value which corresponds to the distance or the thickness, characterised in that in the path of the reflected light beam component (3) there is arranged a third light-sensitive detector ($PD_C$), and the signal from this detector ($PD_C$) is fed together with the signal time discriminator (14) whose output pulse can be converted via a pulse-digital-converter (15) and via a digital-analogue-converter (16) into a d.c. voltage which is proportional to the time difference between the two signals, this d.c. voltage being fed to an input of a differential amplifier (17) to whose other input is applied a predeterminable reference voltage ($U_{Ref}$), and the output signal from the differential amplifier (17) serving as a regulating signal for the direction of the light beam (3).

3. A device as claimed in claim 2, comprising a piezoceramic beam deflector, characterised in that the output of the differential amplifier (17) is directly connected to the piezoceramic beam deflector (2).

4. A device as claimed in claim 2, comprising a piezoceramic beam deflector, characterised in that the output voltage from the differential amplifier (17) is fed to a motor potentiometer (18) whose variable centre-tap (19) is connected to the piezoceramic beam deflector (2).

# FIG 1a

# FIG 1b

# FIG 2

# FIG 3